# FASCICULE DE BREVET EUROPEEN

(11) **EP 1 048 421 B1**
(45) Date de publication et mention de la délivrance du brevet: **11.10.2006**
(21) Numéro de dépôt: 99201316.9
(22) Date de dépôt: 26.04.1999
(51) Int. Cl.: B27F 7/15, B25H 7/00, B23Q 17/24

(54) **Dispositif d'assistance pour l'assemblage d'éléments en bois**
Vorrichtung zum Unterstützen des Zusammenfügens von Holzteilen
Device for assisting the assembly of wooden elements

(43) Date de publication de la demande: 02.11.2000
(73) Titulaire: Charpenet, Louis-Joseph, 58000 Nevers (FR)
(72) Inventeur: Charpenet, Louis-Joseph, 58000 Nevers (FR)
(74) Mandataire: Poupon, Michel

(56) Documents cités:
- DE-C- 335 785
- DE-C- 19 511 827
- FR-A- 1 599 737
- FR-A- 2 499 452
- FR-A- 2 777 824
- US-A- 3 068 483
- US-A- 3 826 188
- US-A- 5 388 318
- US-A- 5 430 662

## Description

La présente invention concerne un dispositif d'assistance à la fabrication de structures composées d'éléments en bois liés entre eux par des pièces métalliques munies de picots connues sous le nom de connecteurs. Ces structures sont fabriquées sur une machine adéquate essentiellement composée d'une table de fabrication au dessus de laquelle se déplace un portique muni d'un système de pressage. Ce système est destiné à enfoncer les connecteurs dans les éléments en bois aux points de jonctions.

De telles structures sont couramment utilisées dans différents domaines d'activités, notamment dans la fabrication de palettes ou de caisses, dans la fabrication de maisons à ossatures bois et dans la fabrication de charpentes constituées d'éléments préfabriqués appelés "fermettes".

Après en avoir déterminé leurs caractéristiques manuellement ou avec un logiciel ad hoc, les différents éléments en bois rentrant dans la composition, par exemple, d'une fermette sont coupés en longueur et en angle, puis positionnés sur la table en vue de leur assemblage. Les connecteurs sont alors positionnés dessous et dessus au droit de chaque point de jonction.

Une contre-plaque est placée en même temps dans le connecteur du dessous. Cette contre-plaque consiste en une plaque métallique munie d'ergots permettant le centrage du connecteur sur celle-ci, les picots du connecteur étant au dessus. Afin de reproduire le plus fidèlement possible le même montage pour les autres fermettes composant la charpente complète, les opérateurs fixent judicieusement une série de cales contre les éléments en bois, réalisant ainsi le gabarit. Pour finaliser l'assemblage de la fermette, les connecteurs sont enfoncés sous une pression importante, assurant ainsi la liaison des différents éléments en bois entre eux. La fermette est alors retirée, et les contre-plaques, qui sont bien entendu restées sur la table, sont fixées par clouage ou vissage. On peut alors réaliser la série de fermettes identiques.

Ce procédé de fabrication, très répandu, suppose des temps de préparation très longs, ce qui ne serait pas très pénalisant si les séries de fabrication étaient importantes. Malheureusement, ce n'est plus du tout le cas actuellement, ce qui oblige les opérateurs à changer de gabarit très fréquemment. D'autant plus que bien souvent aujourd'hui, une charpente d'un seul pavillon est composée de fermettes différentes. Ainsi, en plus de la fabrication d'un groupe de fermettes principales, il faut fabriquer des fermettes dérivées de celles-ci en modifiant pour chacune d'entre elles le gabarit.

Pour limiter au maximum ces temps de préparation, deux types de procédés sont connus :

Le premier est basé sur la projection en vrai grandeur de la fermette, ou d'une partie de la fermette, à réaliser sur la table de travail (le plan de la fermette ayant été réalisé au moyen d'un logiciel ad hoc en bureau d'étude), et il est par exemple décrit dans le document D1-US-5,388,318.

Les opérateurs placent alors à vue les cales afin de réaliser le gabarit.

Le principal inconvénient de ce procédé en est le coût. En effet, il faut un ou plusieurs dispositifs de projection très coûteux, de type explorateur laser, pour visualiser complètement une fermette de taille moyenne. De plus, cet équipement doit être associé à une machine réalisant l'enfoncement des connecteurs.

L'autre type de procédé vise à remplacer l'action manuelle de pose ou de mise en position des cales par un procédé automatique.
L'équipement permettant la mise en place des cales fait partie de la machine réalisant l'enfoncement des connecteurs. Un bras manipulateur vient prendre chaque cale équipée de pointes dans un magasin embarqué. La machine se déplace alors en coordonnées X Y afin d'atteindre l'endroit souhaité de position de cette cale.

Elle est alors enfoncée dans la table. L'opération est renouvelé à chaque point de calage.

Ce procédé présent six inconvénients majeurs :
- D'abord, la mise en place du gabarit complet est longue et les opérateurs restent de longues minutes inactifs.
- Le système mécanique mis en oeuvre est complexe et coûteux.
- Il ne règle pas le problème de positionnement des contre-plaques des connecteurs du dessous.
- il rend délicat ia modification du gabarit principal pour les fermettes dérivées.
- Pour positionner un nouveau chantier, il faut d'abord que la machine procède à l'enlèvement des cales existantes entraînant à nouveau des temps d'attente.
- Le bois utilisé n'étant que très rarement du bois calibré, il arrive régulièrement que celui-ci est plus large que la cote théorique.

Or, les cales étant positionnées par rapport aux dimensions théoriques, il arrive donc fréquemment que les éléments en bois ne rentrent pas dans le gabarit.

La présente invention a pour objet de palier à ces inconvénients en proposant un procédé d'assistance pour l'assemblage d'éléments en bois sur une table de fabrication de différents types de structures tels qu'éléments de maisons à ossature bois, de caisses ou de palettes, de charpentes, et en particulier de fermettes, les assemblages des différents éléments en bois étant réalisés au moyen de plaques métalliques munies de picots appelées connecteurs enfoncées aux points de jonction, procédé ayant pour objet l'aide au positionnement de cales représentant le gabarit et l'aide au positionnement de contre-plaques de connecteurs inférieurs permettant la fabrication d'une série de fermettes caractérisé en ce que, d'une part, on utilise un dispositif autonome d'une ou plusieurs sources lumineuses émettant un rayon dirigé vers le bas, chacun capable de couvrir toute la table, et en ce qu'on positionne, par l'intermédiaire d'un ou plusieurs points de visée, l'emplacement et l'orientation des différentes cales et contre-plaques, les coordonnées étant définies par un logiciel ad hoc, et transmises au coffret de pilotage par un moyen approprié, et caractérisé, d'autre part, en ce qu'on projette, avec l'une des sources lumineuses, un point de visée qui positionne d'abord un premier emplacement où l'on doit placer une fixation de cale ou de contre-plaque puis, par déplacement de la source ou de son point de visée selon (X) et en (Y), on positionne un deuxième point de fixation et ainsi de suite.

Le procédé peut être mis en oeuvre par une ou plusieurs sources lumineuses émettant chacune un point de visée, très visible, dirigé vers le bas. Ce ou ces poins de visée sont capables de ses positionner à n'importe quel endroit de la table. Ils reçoivent leurs informations de déplacements et d'arrêts d'un système de pilotage conçu à cet effet. Les opérateurs suivent alors le ou les points lumineux, et fixent par vissage ou clouage par exemple les cales et contre-plaques aux endroits indiqués par le ou les points lumineux sur la table.

Dans une forme préférentielle de l'invention, les cales et contre-plaques sont percées d'au moins deux trous, à entre axe connue, au diamètre d'une pointe. Un logiciel de calcul de charpente définit, en même temps que la structure, et pour chaque cale et contre-plaque, deux points correspondants aux deux trous. Le tableau de données de chaque point est transmis au système de pilotage par un moyen approprié tel que câble, disquette, faisceau infra rouge, code à barres ou autres. L'opérateur lance alors la machine qui déplace sa source lumineuse à l'endroit approprié. Le point de visée s'allume, indiquant à l'opérateur qu'il doit positionner un des deux trous de la cale ou de la contre-plaque à ce point. Il enfonce un clou dans ce trou. La source lumineuse se déplace à nouveau, le point de visée s'allume, indiquant à l'opérateur la position du deuxième trou. Par rotation de la cale ou de la contre-plaque, il met alors le deuxième trou en vis à vis du point de visée, et enfonce un nouveau clou. L'opération est renouvelée pour toutes les cales et contre-plaques. Pour les différencier, on pourra, par exemple, utiliser un point lumineux continu pour les cales et un point lumineux clignotant pour les contre-plaques.

Dans une autre forme préférentielle de l'invention, la source lumineuse est embarquée sur le portique de pressage. Les mouvements longitudinaux sont alors assurés par le portique lui même, tandis que les mouvements transversaux sont assurés par une unité motorisée fixée parallèlement à la poutre de pressage.

A ce dispositif, on peut naturellement joindre la possibilité d'avoir plusieurs points lumineux donnant, en une ou plusieurs fois, les différents points de positionnement et de fixation des cales et contre-plaques.

On voit la simplicité de mise en oeuvre, d'autant plus efficace que d'une part dans la première forme de réalisation préférentielle de l'invention il est possible de réaliser le gabarit sans monopoliser le portique de pressage et que d'autre part la fabrication des fermettes dérivées des fermettes principales devient très rapide : il suffit d'ajouter quelques cales et contre-plaques et le nouveau gabarit est prêt.

Enfin, il faut ajouter que l'enlèvement du gabarit se fait manuellement à l'aide d'un outil approprié, permettant "d'arracher" les cales et contre-plaques rapidement.

La description et les dessins annexés représentent naturellement un mode non limitatif de réalisation de la présente invention.

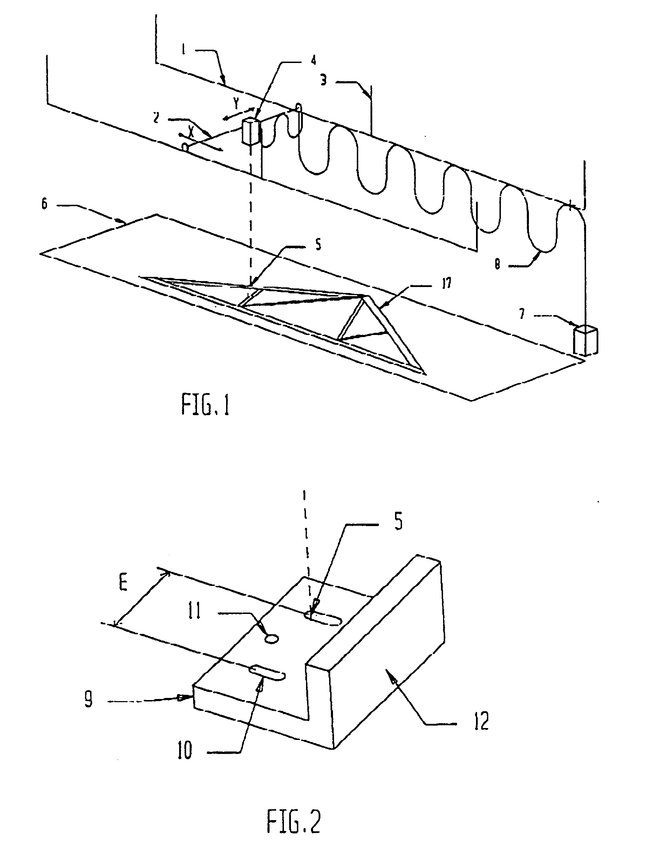

- La **figure 1** représente une vue en perspective d'un dispositif d'assistance pour l'assemblage d'éléments en bois, exécuté selon une forme de réalisation de l'invention.
- La **figure 2** représente une vue en perspective d'une cale de positionnement.

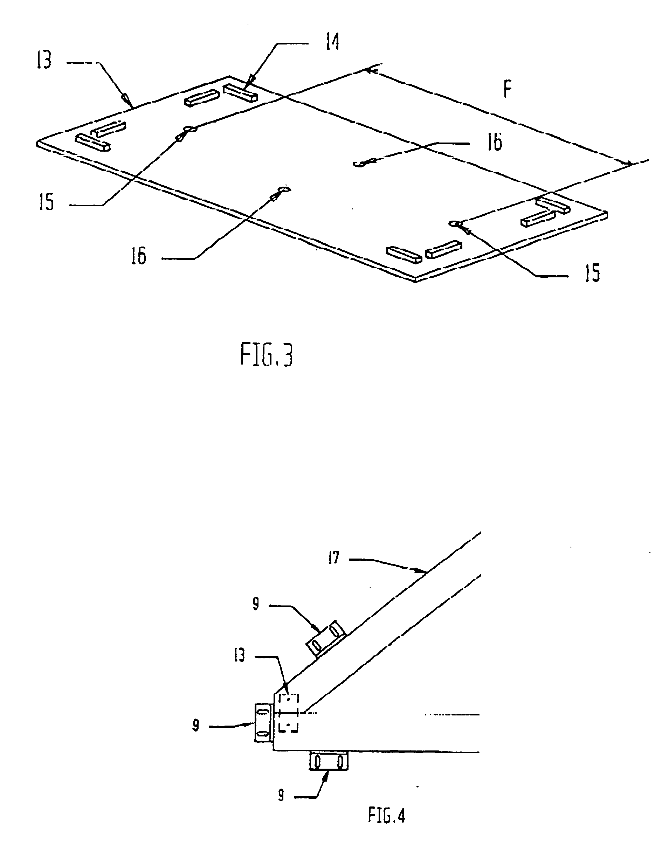

- La **figure 3** représente en perspective une contre-plaque de connecteur.
- La **figure 4** représente en vue de dessus le détail de positionnement de cales et de contre-plaques sur un point de jonction d'une fermette.

Au dessus de la table (6) est fixé un ensemble de rail (1) et (2) permettant à la source lumineuse (4) de se déplacer en (X) et en (Y) au dessus de la table (6). Le coffret de pilotage (7) reçoit les données du logiciel de calcul est gère les déplacements de la source lumineuse (4) via le câble (8). Le point de visée (5) provenant de la source lumineuse (4) ne s'allume qu'au moment opportun où il est arrivé à l'endroit où l'opérateur doit placer une cale (9) ou une contre-plaque (13). Il est alors continu ou clignotant suivant qu'il s'agisse d'une cale (9) ou d'une contre-plaque (13). Pour la bonne orientation de la cale (9) et également de la contre-plaque (13), chaque cale (9) ou chaque contre-plaque (13) a au moins deux points de fixation. Le second point de fixation se définit grâce à une seconde position, pour une même cale (9) ou une même contre-plaque (13), du point de visée (5). Une rotation de la cale (9) ou de la contre-plaque (13) autour de son premier point de fixation permet de positionner le second point de fixation de la cale (9) ou de la contre-plaque (13) au droit du second point de visée (5).

La cale (9) comporte des lumières (10) qui servent à la fois à son positionnement par rapport au point de visée (5) et à sa fixation par vissage ou clouage sur la table. L'entre axe (E) est de dimension connue. La forme en lumière permet un réglage instantané de quelques millimètres afin de préparer un gabarit conforme aux dimensions réelles des bois mis en oeuvre. Le ou les trous (11) permettent de renforcer la tenue sur la table (6).

Une autre possibilité de régler le problème des différences de cotes entre la largeur théorique et pratique d'un élément en bois consiste à équiper la face d'appui (12) de la cale (9) d'un matériau souple, ou bien de lui ajouter en parallèle une plaque à un ou plusieurs ressorts.

La contre-plaque (13) comporte deux trous (15) de positionnement et fixation ayant le même objectif que les lumières (10) des cales (9). L'entre axe (F) est lui aussi connu. Elle possède également un ou plusieurs trous (16) permettant de renforcer la tenue sur la table.

Ainsi, chaque élément en bois de la fermette (17) est tenu par des cales (9), et la position de chaque connecteur se plaçant sous le bois est déterminée par les contre-plaques (13).

## Revendications

1. Procédé d'assistance pour l'assemblage d'éléments en bois sur une table de fabrication (6) de différents types de structures tels qu'éléments de maisons à ossature bois, de caisses ou de palettes, de charpentes, et en particulier de fermettes (17), les assemblages des différents éléments en bois étant réalisés au moyen de plaques métalliques munies de picots appelées connecteurs enfoncées aux points de jonction, procédé ayant pour objet l'aide au positionnement de cales (9) représentant le gabarit et l'aide au positionnement de contre-plaques de connecteurs inférieurs (13) permettant la fabrication d'une série de fermettes (17) **caractérisé en ce que**, d'une part, on utilise un dispositif autonome d'une ou plusieurs sources lumineuses (4) émettant un rayon dirigé vers le bas, chacune capable de se déplacer en (X) et en (Y) sur toute la table (6), et **en ce qu'**on positionne, par l'intermédiaire d'un ou plusieurs points de visée (5) chacun émis par une source (4), l'emplacement et l'orientation des différentes cales (9) et contre-plaques (13), les coordonnées de chaque point de visée étant définies par un logiciel ad hoc, et transmises au coffret de pilotage (7) par un moyen approprié, et **caractérisé**, d'autre part, **en ce qu'**on projette, avec l'une des sources lumineuses, un point de visée (5) qui positionne d'abord un premier emplacement où l'on doit placer une fixation de cale (9) ou de contre-plaque (13) puis, par déplacement de la source ou de son point de visée selon (X) et (Y), on positionne un deuxième point de fixation et ainsi de suite.

2. Procédé selon la revendication 1, **caractérisé en ce que** un second point de fixation se définit par rotation, autour du premier point de fixation, du point de visée ayant servi à définir ce premier point de fixation.

3. Procédé selon la revendication 1, **caractérisé en ce que** le second point de fixation se définit par translation du point de visée ayant servi à définir le premier point de fixation.

4. Procédé selon l'une des revendications 1 à 3, **caractérisé en ce qu'**on utilise plusieurs sources émettant plusieurs points lumineux donnant en une ou plusieurs fois, les différents points de fixation.

## Claims

1. Method of assisting, on a production bench (6), the assembly of wooden elements of various types of structures such as house elements with a wooden frame, case elements or pallet elements, framework elements and, more particularly, trusses (17), the assembling of the various wooden elements being achieved by means of metal plates, provided with wedges, called connectors which are driven in at the junction points, the object of which method is to assist in positioning blocks (9) representing the gauge and to assist in positioning counter-plates of lower connectors (13), which permit the production of a series of trusses (17), **characterised in that**, on the one hand, an autonomous device of one more or more light sources (4) is used, emitting a beam directed downwardly, each light source being capable of being displaced in the (X) and in the (Y) direction over all of the table (6), and **in that** the location and the orientation of the various blocks (9) and counter-plates (13) is positioned through the intermediary of one or more targeted points (5), each one emitted by one source (4), the co-ordinates of each targeted point being defined by ad hoc software and transmitted to the control box (7) by an appropriate means, and **characterised in that**, on the other hand, one targeted point (5) is projected with one of the light sources, which targeted point first of all positions a first location where a block (9) or a counter-plate (13) is to be placed, then, by displacement of the source or of its targeted point in the direction of (X) and (Y), a second securement point is positioned and so on.

2. Method according to claim 1, **characterised in that** a second securement point is defined by rotation, about the first securement point, of the targeted point which has served to define this first securement point.

3. Method according to claim 1, **characterised in that** the second securement point is defined by displacement of the targeted point which served to define the first securement point.

4. Method according to one of claims 1 to 3, **characterised in that** a plurality of sources are used, which emit a plurality of light points and give, at one time or at several times, the various securement points.

## Patentansprüche

1. Verfahren zur Unterstützung beim Zusammenfügen von Holzelementen auf einem Fertigungstisch (6) verschiedener Strukturentypen, wie zum Beispiel Elemente von Häusern mit Holzgerüst, Kisten oder Paletten, Fachwerk und insbesondere Sparren (17), wobei das Zusammenfügen der verschiedenen Elemente aus Holz mittels Metallplatten durchgeführt wird, die mit Stiften versehen sind, die Verbinder genannt werden, die an den Verbindungspunkten eingeschlagen werden, wobei das Verfahren die Aufgabe der Hilfe beim Positionieren von Keilen (9) hat, die die Schablone darstellen und die Hilfe beim Positionieren von Gegenplatten unterer Verbinder (13), die das Herstellen einer Reihe von Sparren (17) erlauben, **dadurch gekennzeichnet, dass** man einerseits eine autonome Vorrichtung mit einer oder mehreren Lichtquellen (4) verwendet, die einen nach unten gerichteten Strahl abgeben, wobei jede in der Lage ist, sich in (X) und in (Y) auf dem ganzen Tisch (6) zu bewegen, und dass man mittels eines oder mehrerer Zielpunkte (5), die jeder von einer Quelle (4) abgegeben werden, die Lage und die Ausrichtung der verschiedenen Keile (9) und Gegenplatten (13) positioniert, wobei die Koordinaten jedes Zielpunkts durch eine Software zu diesem Zweck definiert und dem Steuergehäuse (7) durch ein entsprechendes Mittel übertragen werden, und andererseits **dadurch gekennzeichnet, dass** man mit einer der Lichtquellen einen Zielpunkt (5) projiziert, der zuerst eine erste Stelle positioniert, an welcher man eine Befestigung für einen Keil (9) oder eine Gegenplatte (13) anordnen muss, und man dann durch Bewegen der Lichtquelle oder ihres Zielpunkts entlang (X) und (Y) einen zweiten Befestigungspunkt positioniert und so weiter.

2. Verfahren nach Anspruch 1, **dadurch gekennzeichnet, dass** ein zweiter Befestigungspunkt durch Drehung um den ersten Befestigungspunkt des Zielpunkts, der zum Definieren dieses ersten Befestigungspunkts gedient hat, definiert wird.

3. Verfahren nach Anspruch 1, **dadurch gekennzeichnet, dass** der zweite Befestigungspunkt durch Verschieben des Zielpunkts, der zum Definieren des ersten Befestigungspunkts gedient hat, definiert wird.

4. Verfahren nach einem der Ansprüche 1 bis 3, **dadurch gekennzeichnet, dass** man mehrere Quellen verwendet, die mehrere Lichtpunkte senden, die auf einmal oder in mehreren Malen die verschiedenen Befestigungspunkte geben.
